# EUROPEAN PATENT SPECIFICATION

(11) **EP 1 921 804 B1**
(45) Date of publication and mention of the grant of the patent: **16.01.2013**
(21) Application number: 07021789.8
(22) Date of filing: 09.11.2007
(51) Int. Cl.: H04L 12/46, H04L 12/24, H04L 12/28

(54) **Method and system for transmitting connectivity fault management messages in ethernet, and a node device**
Verfahren und System zur Übertragung von Konnektivitätsfehlermeldungen in das Ethernet und Knotenvorrichtung
Procédé et système pour transmettre des messages de gestion de défauts de connectivité dans l'Ethernet et dispositif de noeud

(30) Priority: 09.11.2006 CN 200610137898; 13.07.2007 WO PCT/CN2007/070294
(43) Date of publication of application: 14.05.2008
(73) Proprietor: Huawei Technologies Co., Ltd., Longgang District, Shenzhen Guangdong 518129 (CN)
(72) Inventor: Long, Hao, Huawei Technologies Co., Ltd., IP Department, Shenzhen Guangdong Province 518129 (CN); Deng, Zhusheng, Huawei Technologies Co., Ltd., IP Department, Shenzhen Guangdong Province 518129 (CN)
(74) Representative: Pfenning, Meinig & Partner GbR

(56) References cited:
- US-A1- 2005 099 948
- US-A1- 2005 099 949
- US-A1- 2005 265 356
- DON FEDYK ET AL: "GMPLS control of Ethernet; draft-fedyk-gmpls-ethernet-pbt-01.txt" October 2006 (2006-10), IETF STANDARD-WORKING-DRAFT, INTERNET ENGINEERING TASK FORCE, IETF, CH , XP015047596 ISSN: 0000-0004 * paragraphs [04.4], [00A4] *
- STEVENS ET AL: "TCP/IP ILLUSTRATED, Vol. 1. THE PROTOCOLS" TCP/IP ILLUSTRATED. VOL. 1 : THE PROTOCOLS, PROFESSIONAL COMPUTING SERIES, READING, MA : ADDISON WESLEY, US, vol. VOL. 1, 1994, pages 85-96, XP002106390 ISBN: 0-201-63346-9
- BOTTORFF P., MARTIN D., PARSONS G., MOHAN D.: "BUSINESS MADE SIMPLE - PAR FOR PROVIDER BACKBONE TRANSPORT" BUSINESS MADE SIMPLE - PAR FOR PROVIDER BACKBONE TRANSPORT, [Online] 27 October 2006 (2006-10-27), pages 1-36, XP002474883 IEEE, USA Retrieved from the Internet: URL:http://www.ieee802.org/1/files/public/ docs2006/new-bottorff-pbt-par-present-1006 -01.pdf> [retrieved on 2008-04-03]
- IEEE: "802.1QAY - PROVIDER BACKBONE BRIDGE TRAFFIC ENGINEERING" 802.1QAY - PROVIDER BACKBONE BRIDGE TRAFFIC ENGINEERING, [Online] 3 April 2008 (2008-04-03), pages 1-3, XP002474884 IEEE Retrieved from the Internet: URL:http://www.ieee802.org/1/pages/802.1ay .html> [retrieved on 2008-04-03]
- DINESH M: "802.1AG CONNECTIVITY FAULT MANAGEMENT TUTORIAL" INTERNET CITATION, [Online] 12 July 2004 (2004-07-12), XP002346928 Retrieved from the Internet: URL:http://grouper.ieee.org/groups/802/802 _tutorials/july04/802.1ag%20-%2 0CFM%20Tutorial%20-%20Part%201%20v2.ppt> [retrieved on 2005-09-26]

## Description

### Field of the Invention

The invention relates to the field of telecommunication technologies, and in particular, to a method and system for connectivity fault management in a network, and a node device.

### Background of the Invention

The Provider Backbone Bridge Traffic Engineering (PBB-TE) is an Ethernet based solution for provider network. In comparison with a traditional Ethernet, this solution removes the mechanisms of self-learning, spanning tree and flooding, and establishes Ethernet forwarding paths by network management systems (NMS) or control protocols which can operate on Ethernet forwarding table. Unlike the traditional connectionless Ethernet, the PBB-TE is a connection-oriented technology, i.e. in PBB-TE a connection is established prior to the service transmission. PBB-IE is a formal denomination in the Standards organization for the technique which is previously called "Provider Backbone Transport (PBT)". In this application document, the wording "PBB-TE" will be used hereinafter.

In PBB-TE, a Medium Access Control (MAC) destination address and a Virtual Local Area Network (VLAN) Identifier (ID) are used together to identify a unidirectional forwarding path. A PBB-TE packet is forwarded according to the destination MAC address and the VLAN ID which are encapsulated in the packet header. If PBB-TE switch receives a PBB-TE packet with DA/VID pair which not present in the forwarding table, the PBB-TE packet will be discarded instead of being broadcast. The forwarding entries are installed by management plane or the control plane, not by utilization of spanning tree protocol and an address learning mechanism.

A provider network always requires maintenance mechanisms to provide the capability of monitoring, diagnostic and protection, etc.. The maintenance mechanism is referred to as Operation, Administration and Maintenance (OAM) mechanism in ITU-T, and as Connectivity Fault Management (CFM) mechanism in IEEE. Because the PBB-TE standard is developed in IEEE at present, this application document will use the IEEE denomination, i.e. CFM, hereinafter. Though the mechanism may also be applied to adaptation to the OAM mechanism of ITU-T.

The traditional Ethernet is a kind of connectionless technology. So, the CFM mechanism of the traditional Ethernet is also connectionless, which includes:

1. Continuity Check (CC) mechanism. The procedure for the CC mechanism is as follows. The Maintenance association End Points (MEPs) periodically send CC messages (CCM) to other MEPs in the same Maintenance Association (MA). If no CC messages have been received from any MEP within 3.5 times of the CC interval, alerts will be generated to notify that there may be some failure on the connection. Information, such as an MEP list and MD level, are preconfigured on the MEP. Faults, such as link failure, misconnection, can be detected by CC mechanism. There are two kinds of CC messages, multicast CC message and Unicast CC message. The multicast CCM is applicable to all types of connection monitoring. The destination address of multicast CC message is a special CFM multicast address. A multicast CC message is broadcast to all other MEPs in the same MA. Unicast CC is applicable to point-to-point connection monitoring. The destination address of unicast CC message is the address of the remote MEP. A unicast CC message is forwarded along a unicast forwarding path.

2. Loopback (LB) mechanism. LB is typically used for fault location A loopback initiator transmits an LB message (LBM) to a destination Maintenance Point (MP). When receiving a LBM, the destination maintenance point will return an LB reply (LBR) to the loopback initiator. If the loopback initiator has not received an expected LBR within a certain period of time, it means that a connectivity fault is present between the loopback initiator and the destination maintenance point. Multicast LB is applicable to loopback check between a MEP and all other MEPs in the same MA. The destination address of a multicast LB message is a special CFM multicast address. Unicast LB is applicable to point-to-point loopback check. The destination address of a unicast LB message is the address of an MIP/MEP. A unicast LB message is forwarded along a unicast path.

3. Linktrace (LT) mechanism. A linktrace message (LTM) is transmitted by a MEP linktrace initiator in order to perform path discovery and fault isolation. When receiving the LTM, a maintenance point (MP) will return a unicast linktrace reply (LTR) to the linktrace initiator, and issues a new UM towards the target MEP. Thus, the linktrace initiator can learn all the nodes on the forwarding path. If no expected LTR is returned, a fault can be located by the LTRs previously returned. LTM messages are encapsulated with a special CFM multicast address. However, the LTM is forwarded along the unicast path because the outport is determined by the target MAC address carried in the LTM PDU.

However, the CFM mechanisms for connectionless Ethernet can not be used to monitor PBB-TE connection. A CFM message is forwarded according to destination address (DA) and VLAN ID. However, in PBB-TE, the DA/VID pair is used to identify a PBB-TE path, but not the destination address of a message, so the CFM functions which need process CFM messages by intermediates node of a PBB-TE path can not be implemented by previous art, especially for monitoring sub network connection (SNC). For the purpose of convenience, a complete connection will be referred to as a "path", and a monitored part will be referred to as a "connection" hereinafter in this application document.

Further, for the CFM mechanisms which need reply messages, such as LB, and LT, the message may be returned directly in an Ethernet, because paths in the Ethernet are bidirectional. However in the PBB-TE, a bidirectional path has different identifiers, particularly different VLAN IDs. Moreover in the PBB-TE, a message unknown to a node will be discarded instead of being broadcast. In this way, with the CFM mechanisms of Ethernet, the reply message may not be transmitted and received correctly in a PBB-TE network.

STEVENS ET AL: "TCP/IP ILLUSTRATED, Vol. 1. THE PROTOCOLS" TCP/IP ILLUSTRATED, VOL. 1: THE PROTOCOLS, PROFESSIONAL COMPUTING SERIES, READING, MA: ADDISON WESLEY, US, vol. VOL. !, 1994, pages 85-96, XP002106390 ISBN: 0-201-63346-9, relates to an IP record route option. An IP datagram with IP record route option is transmitted, and every router that receives and handles the datagram adds its IP address to a list in the options field. When the datagram reaches a final destination, the list of IP addresses are copied into the outgoing ICMP echo reply, and all the routers on the return path also add their IP address to the list.

US 2005/265356 A1 relates to a method and apparatus for keeping track of VLAN topology in a network of nodes. A node that belongs to a VLAN sends a request packet to each of its adjacent nodes that belong to the VLAN; each of the adjacent nodes, after receiving the request packet, sends the request message to each of its adjacent nodes that belong to the VLAN and sends back a reply packet to the sending node.

US 2005/099948 A1 relates to an automated path tracing from an original mesh switch through a switching mesh to a specified destination. The mesh traceroute packet is transmitted via an exit port associated with the specified destination and the returned packet is received.

US 2005/099949 A1 relates to an Ethernet OAM (Operation Administration and Maintenance) Domains and Ethernet OAM frame format. It actually is similar to the conventional Ethernet OAM mechanism as mentioned in the background portion of the present application. The destination address is contained in the header of the OAM frame, and no connectivity maintenance target address is contained in the body of the OAM frame.

Finally, DON FEDYK ET AL: "GMPLS control of Ethernet; draft-fedyk-gmpls-ethernet-pbt-01.txt" October 2006 (2006-10), IETF STANDARD-WORKING-DRAFT, INTERNET ENGINEERING TASK FORCE, IETF, CH, XP015047596 ISSN: 0000-0004, discloses the specification of a control plane for provider backbone transport (PBT) that uses techniques for Ethernet. PBT is an Ethernet connection technology that can be controlled y configuration of static filtering entico. PBT path are created switch by switch by simple configuration of Ethernet logical parts and assignment of PBT labels.

### Summary of the Invention

The definicies of the prior art are overcome by the method for processing a connectivity fault management message according to claim 1, the receiving node device according to claim 2, the source node device according to claim 3 and the system for implementing connectivity fault management according to claim 4.

In the technical solutions, a CFM message is forwarded according to the information of a MAC address and a VLAN ID. The pair of a MAC address and a VLAN ID is the path identifier of a path which includes a monitored connection, and therefore the CFM message can be correctly forwarded in a PBB-TE network.

Furthermore, for the CFM methods requiring a reply message, such as LB, and LT, the information of a MAC address and a VLAN ID of a return path is carried in a message, and thus the reply message may be correctly returned in the PBB-TE network.

### Brief Descriptions of the Drawings

Figure 1 is a flow chart illustrating a method for transmitting and processing a connectivity fault management message in Ethernet network according to an embodiment of the invention;

Figure 2 is a flow chart illustrating a method for transmitting and processing a connectivity fault management message in Ethernet network according to an embodiment of the invention;

Figure 3 is a configuration diagram illustrating connectivity fault management in a PBB-TE network;

Figure 4 is a diagram illustrating the format of an LBM according to an embodiment of the invention;

Figure 5 is a diagram illustrating the format of an LBR according to an embodiment of the invention;

Figure 6 is a diagram illustrating the format of an LBM according to an embodiment of the invention;

Figure 7 is a diagram illustrating the format of an LBR according to an embodiment of the invention;

Figure 8 is a diagram illustrating the format of an LBM according to an embodiment of the invention;

Figure 9 is a diagram illustrating the format of an LTM according to an embodiment of the invention;

Figure 10 is a diagram illustrating the format of an LTR according to an embodiment of the invention;

Figure 11 is a diagram illustrating the format of an LTM according to an embodiment of the invention;

Figure 12 is a diagram illustrating the format of an LTR according to an embodiment of the invention;

Figure 13 shows a system for transmitting a connectivity fault management message of Ethernet according to an embodiment of the invention;

Figure 14 is a flow chart illustrating the process that a node processes the structure of a PBB-TE data frame in the prior art;

Figure 15 is a flow chart illustrating the process that a node processes the structure of a modified PBB-TE data frame according to an embodiment of the invention.

### Detailed Descriptions of the Embodiments

Embodiments of the invention will be described in detail as follows with reference to the drawings.

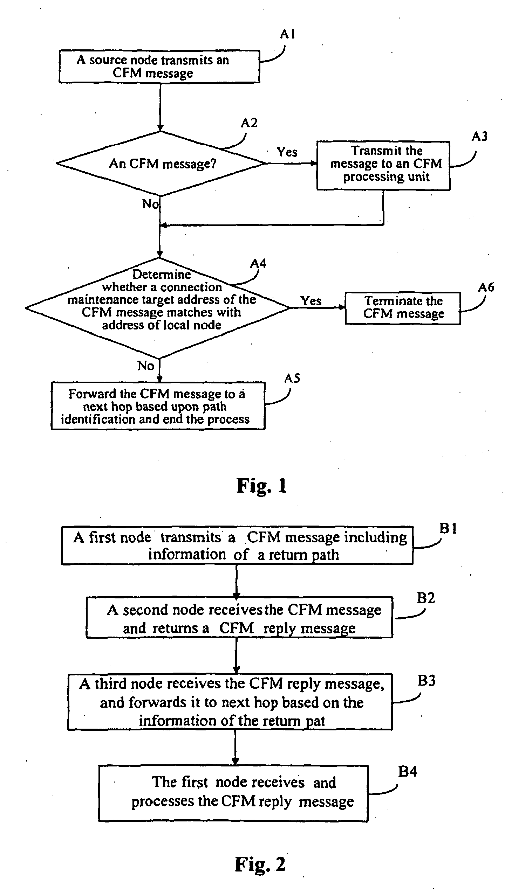

Figure 1 shows a flow of a method for transmitting and processing a connectivity fault management (CFM) message of Ethernet according to an embodiment of the invention. The method includes the follows.

Block A1, a source node transmits a CFM message including a path identifier of a path including a monitored connection, and a connection maintenance target address. The path identifier of the path includes a Medium Access Control (MAC) address and a Virtual Local Area Network Identifier (VLAN ID).

Block A2, a receiving node judges whether the message is a CFM message based on Ethernet type. If the message is a CFM message, the process proceeds to block A3; otherwise the message is processed with methods corresponding to other types.

Block A3, the CFM message is delivered to a CFM processing unit, and the process proceeds to block A4.

Block A4, it is judged whether the connection maintenance target address of the CFM message matches an address of the receiving node itself. If the connection maintenance target address of the CFM message matches the address of the receiving node itself, the process proceeds to block A6; otherwise to block A5.

Block A5, the CFM message is forwarded to a next hop based on the path identifier of the path, and the process is ended.

Block A6, the CFM message is terminated and processed.

Figure 2 shows a flow of a method for transmitting and processing a connectivity fault management (CFM) message of Ethernet according to an embodiment of the invention. The method is as follows.

Block B1, a first node transmits a connectivity fault management (CFM) message. A protocol data unit (PDU) of the CFM message carries information of a return path. The information of the return path includes a MAC address and/or a virtual local area network identifier (VLAN ID) of the path identifier of the return path.

Block B2, a second node receives the CFM message transmitted from the first node, and transmits a CFM reply message. The header of the CFM reply message is encapsulated according to the information of the return path.

Block B3, a third node receives the CFM reply message, and forwards the CFM reply message to next hop based on the information of the return path.

Block B4, the first node receives the CFM reply message, and processes the CFM reply message.

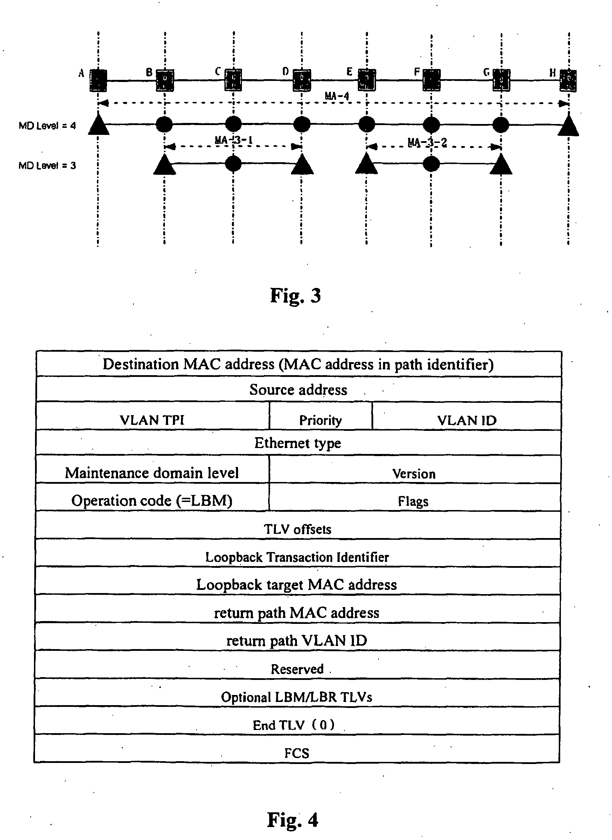

Figure 3 shows configuration of maintenance points in a PBB-TE network. The PBB-TE network includes eight nodes A to H, configured with two Maintenance Domain Levels (MD levels).

1. A maintenance association with an MD Level of 4 includes an MA-4. MEP ports of MA-4 are configured on the nodes A and H, and MIP ports of MA-4 are configured on the six nodes B-G. Suppose that VLAN ID of a path from A to H, is VID (3), and path MAC address in path identifier of the path is MAC (H).

2. Two MAs, i.e. MA-3-1 and MA-3-2, have an MD Level of 3. Nodes on the two MAs belong to different operators. MEP ports of MA-3-1 are configured on nodes B and D, and MIP port MA-3-1 is configured on node C. MEP ports of MA-3-2 are configured on nodes E and G, and MIP port of MA-3-2 is configured on node F.

*Embodiment 1*

If a Continuity Check (CC) from node B to node D with MD Level of 3 is required, and a destination MAC address in a CFM message transmitted from a source node is a MAC address of a path including a monitored connection, when the maintenance points of the PBB-TE network are configured as illustrated in Figure 3, a method for transmitting and processing a connectivity fault management (CFM) message according to an embodiment of the invention is as follows.

s101, an MEP list, and a time interval t, at which Continuity Check Messages (CCMs) are transmitted, are configured at the destination node D.

s102, the source node B initiates a CC check, and generates and transmits a CCM to the destination node D at a time interval of t. The CCM is composed of an Ethernet header and a CCM PDU. The Ethernet header includes:

a destination MAC address, i.e. a path MAC address in path identifier of a path including a monitored connection. There is no dedicated path identifier for B-to-D, but path B-to-D is a part of path A-to-H. Therefore, in the CCM, the destination MAC address is the MAC address of H, i.e. MAC (H), instead of the MAC address of D;

a VLAN ID, i.e. a virtual local area network identifier of the path identifier. There is no dedicated path identifier for B-to-D, but path B-to-D is a part of path A-to-H. Therefore in the CCM, the VLAN ID is VID (3) of path A-to-H;

an Ethernet type, indicating Ethernet type of the CCM. Here the value is Ethernet type for CFM in this embodiment;

The CCM PDU includes:

a maintenance domain level, indicating a maintenance domain (MD) level at which a maintenance association (MA) is located;

an operation code, indicating type of CFM operation. Here the value is the opcode assigned for CCM.

s103, the node receiving the CCM processes the CCM.

If the node receiving the CCM is an MIP or a non-maintenance point, the CCM is forwarded according to the MAC address and the VLAN ID.

If the node receiving the CCM is a maintenance association end point (MEP), the following process is performed.

s1031, it is judged whether the received message is a CFM message based on the Ethernet type of the message. If the received message is not a CFM message, it is processed with corresponding mechanism for the Ethernet type, which will not be described here. For example, if the CCM is a service data message, the CCM is forwarded according to the destination MAC address and the VLAN ID. Here, because the CCM is actually a CFM message, the process proceeds to s1032.

s1032, a maintenance domain level configured at receiving node is compared with that of the CFM message, i.e. the CCM. If the maintenance domain level configured at the receiving node is higher than that of the CCM, the CCM is discarded. If the maintenance domain level configured at the receiving node is lower than that of the CCM, the CCM is forwarded according to the destination MAC address and the VLAN ID in CCM Ethernet header. If the maintenance domain level configured at the receiving node equals to that of the CCM, the process proceeds to s 1033.

s1033, the CFM message, i.e. the CCM, is terminated. Since the operation code indicates a message type of CCM, the CCM PDU is transmitted to a CC processing unit; otherwise, other process corresponding to the operation code is performed.

*Embodiment 2*

If a Continuity Check (CC) from the nodes B to D of MD Level 3 is required, and a destination MAC address in a CFM message transmitted from a source node is a MAC address dedicated for a CFM function, when the maintenance points of the PBB-TE network are configured as illustrated in Figure 3, a method for transmitting and processing a connectivity fault management message according to the embodiment of the invention is as follows.

s201, an MEP list, and a time interval t, at which CCMs are transmitted, are configured at the destination node D.

s202, the source node B initiates a CC check, and, generates and transmits a CCM to the destination node D at a time interval of t. The CCM is composed of an Ethernet header and a CCM PDU. The Ethernet header includes:

a destination MAC address, i.e. a MAC address dedicated for a CFM/CCM function. All the nodes shall support the processing for this address;

a VLAN ID, i.e. a virtual local area network identifier which is a part of path identifier of a path including a monitored connection. There is no dedicated path identifier for path B-to-D, but the path B-to-D is a part of path A-to-H. Therefore in the CCM, the VLAN ID is VID (3) of the path A-to-H;

an Ethernet type, indicating an Ethernet type of the CCM. Here the value is Ethernet type for CFM in this embodiment;

The CCM PDU includes:

a maintenance domain level, indicating a maintenance domain level of maintenance domain of the CCM;

an operation code, indicating type of CFM operation; Here the value is the opcode assigned for CCM.

a path MAC address which is a part of path identifier of the path including the monitored connection. There is no dedicated path identifier for path B-to-D, but the path B-to-D is a part of path A-to-H. Therefore in the CCM, the path MAC address is the MAC address of H, i.e. MAC (H), instead of the MAC address of D.

s203, after receiving the CCM, the node receiving the CCM transmits the message to a CFM processing unit based on the destination MAC address and Ethernet type of the CCM.

s204, the CFM processing unit processes the CCM.

If the node receiving the CCM is not a maintenance point (MP), it is judged whether the received message is a CFM message based on the Ethernet type of the message. Here because the received message, i.e. the CCM, is a CFM message, the CCM is forwarded according to the path MAC address in PDU and the VLAN ID in the header; otherwise the received message is discarded or processed by other ways.

If the node receiving the CCM is a maintenance domain intermediate point (MIP), it is judged whether the received message is a CFM message based on the Ethernet type of the received message. If the received message is not a CFM message, the CCM is discarded. Here, because the CCM is actually a CFM message, it will be processed by the following way: the maintenance domain level configured at receiving node is compared with that of the CFM message, i.e. the CCM. If the maintenance domain level configured at the receiving node is higher than that of the CCM, the CCM is discarded. If the maintenance domain level configured at the receiving node is lower than or equals to that level of the CCM, the CCM is forwarded according to the path MAC address in the CCM PDU and the VLAN ID in the CCM Ethernet header.

If the node receiving the CCM is an MEP, the following process is performed.

s2041, it is judged whether the received message is a CFM message based on the Ethernet type of the message. If the received message is not a CFM message, the CCM is discarded or processed by other ways. Here, because the received message, i.e. the CCM, is actually a CFM message, the process proceeds to s2042.

s2042, a maintenance domain level configured at local MEP is compared with that of the CFM message, i.e. the CCM. If the maintenance domain level configured at the local MEP is higher than that of the CCM, the CCM is discarded. If the maintenance domain level configured at the local MEP is lower than that of the CCM , the CCM is forwarded according to the path MAC address in the CCM PDU and the VLAN ID in the CCM Ethernet Header. If the maintenance domain level configured at the local MEP equals to that of the CCM, the process proceeds to s2043.

s2043, the CFM message is terminated. If the operation code indicates a message type of CCM, a CCM PDU is transmitted to a CC processing unit; otherwise other operation corresponding to the operation code is performed.

*Embodiment 3*

If a Loopback (LB) check from the node A to node D of MD Level 4 is required, and a destination MAC address in a CFM message transmitted from a source node is a path MAC address in path identifier of a path including a monitored connection, when the maintenance points of the PBB-TE network are configured as illustrated in Figure 3, a method for transmitting and processing a connectivity fault management message according to the embodiment of the invention is as follows.

s301, the source node A initiates an LB check, and generates and transmits a loopback message (LBM) to the destination node D. The LBM is composed of an LBM Ethernet header and a LBM PDU as described by Figure 4. The LBM Ethernet header includes:

a destination MAC address, i.e. a path MAC address in path identifier of a path including a monitored connection. There is no dedicated path identifier for path A-to-D, but the path A-to-D is a part of path A-to-H. Therefore in the LBM, the destination MAC address is the MAC address of H, i.e. MAC (H), instead of the MAC address of D;

a VLAN ID, i.e. a virtual local area network identifier of path identifier of the path including the monitored connection. There is no dedicated path identifier for path A-to-D, but the path A-to-D is a part of path A-to-H. Therefore in the LBM, the VLAN ID is VID (3) of path A-to-H;

an Ethernet type, indicating an Ethernet type of the LBM, which is a CFM message in this embodiment;

The LBM PDU includes:

a maintenance domain level, indicating a preconfigured maintenance domain level;

an operation code, indicating an operation type of the LBM;

a loopback target MAC address, indicating a destination address of the loopback;

a return path MAC address, i.e. a MAC address part of a path identifier of a return path for a Loopback Response (LBR) message. There is no dedicated path identifier for path D-to-A, but the path D-to-A is a part of path H-to-A. Therefore in the LBR, the return path MAC address is the MAC address of A, i.e. MAC (A);

a return path VLAN ID, i.e. a virtual local area network identifier part of a path identifier of a return path for the LBR. There is no dedicated path identifier for path D-to-A, but the path D-to-A is a part of path H-to-A. Therefore in the LBR, the return path VLAN ID is the VLAN ID of path H-to-A.

s302, the node receiving the LBM processes the LBM.

If the node receiving the LBM is a non-MP, the LBM is forwarded according to the destination MAC address and the VLAN ID.

If the node receiving the LBM is an MIP or an MEP, the following process is performed.

s3021, it is judged whether the received message is a CFM message based on the Ethernet type of the received message. If the received message is not a CFM message, the LBM is processed by using a processing method for an Ethernet type, which will not be described here. For example, if the received message is a service data message, the message is forwarded according to the destination MAC address and the VLAN ID. Here because the received message, i.e. the LBM, is a CFM message, the process proceeds to s3022.

s3022, a maintenance domain level configured at receiving node is compared with that of the CFM message, i.e. the LBM. If the maintenance domain level configured at the receiving node is higher than that of the LBM, the LBM is discarded. If the maintenance domain level configured at the receiving node is lower than that of the LBM, the LBM is forwarded according to the destination MAC address and the VLAN ID. If the maintenance domain level configured at the receiving node equals to that of the LBM, the process proceeds to s3023.

s3023, a message type indicated by the operation code is determined. If the operation code indicates a message type of LBM, the process proceeds to s3025; otherwise, other operation corresponding to the operation code is performed.

s3024, it is judged whether the loopback target MAC address points to the receiving node. If it does, the process proceeds to s303; if it does not, in the case that the receiving node is an MIP, the LBM is forwarded according to the destination MAC address and the VLAN ID, and in the case that the receiving node is an MEP, the LBM is terminated.

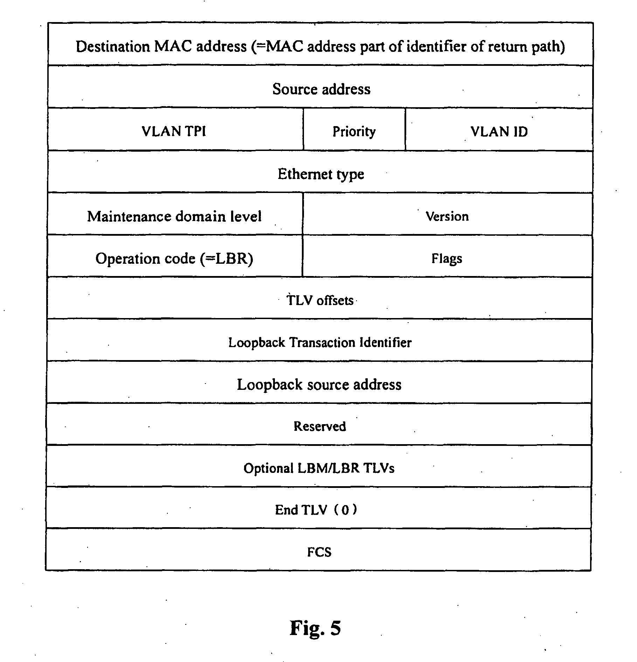

s303, a loopback response (LBR) is transmitted to the source node. The LBR is composed of an LBR Ethernet header and a LBR PDU as described by Figure 5. The LBR Ethernet header includes:

a destination MAC address, i.e. the return path MAC address in the LBM;

a VLAN ID, i.e. the return path VLAN ID in the LBM;

an Ethernet type, indicating an Ethernet type of the LBR, which is a CFM message in this embodiment;

The LBR PDU includes:

a maintenance domain level, indicating a maintenance domain level of maintenance domain of the LBR;

an operation code, indicating an operation type of the LBR;

an original MAC address of the loopback (LB), indicating an address of the MEP initiating the LB.

s304, the node receiving the LBR processes the LBR as follows.

If the node receiving the LBR is a non-MP, the LBR is forwarded according to the destination MAC address and the VLAN ID.

If the node receiving the LBR is an MIP or an MEP, the following process is performed.

s3041, it is judged whether the received message is a CFM message based on the Ethernet type of the received message. If the received message is not a CFM message, the LBR is processed by using a processing methods corresponding to Ethernet type, which will not be described here. For example, if the received message is a service data message, the LBR is forwarded according to the destination MAC address and the VLAN ID. Here because the received message, i.e. the LBR, is a CFM message, the process proceeds to s3043.

s3042, a maintenance domain level configured at the receiving node is compared with that of the CFM message, i.e. the LBR. If the maintenance domain level configured at the receiving node is higher than that of the LBR, the LBR is discarded. If the maintenance domain level configured at the receiving node is lower than that of the LBR, the LBR is forwarded according to the destination MAC address and the VLAN ID. If the maintenance domain level configured at the receiving node equals to that of the LBR, the process proceeds to s3043.

s3043, a message type indicated by the operation code is determined. If the operation code indicates a message type of LBR, the process proceeds to s3044; otherwise other check corresponding to the operation code is performed.

s3044, it is judged whether the original MAC address of the loopback is an address of the receiving node. If it is, the LBR is terminated, and a PDU is transmitted to an LB processing module. If the original MAC address of the loopback is not the address of the receiving node and the receiving node is an MIP, the LBR is forwarded according to the destination MAC address and the VLAN ID, and if the original MAC address of the loopback is not the address of the receiving node and the receiving node is an MEP, the LBR is terminated.

*Embodiment 4*

Supposing that a Loopback (LB) from the node A to node D of MD Level 4 is required, and that a destination MAC address in a CFM message transmitted from a source node is a MAC address dedicated for a CFM function, when the maintenance points of the PBB-TE network are configured as illustrated in Figure 3, a method for transmitting and processing a connectivity fault management message according to the embodiment of the invention is as follows.

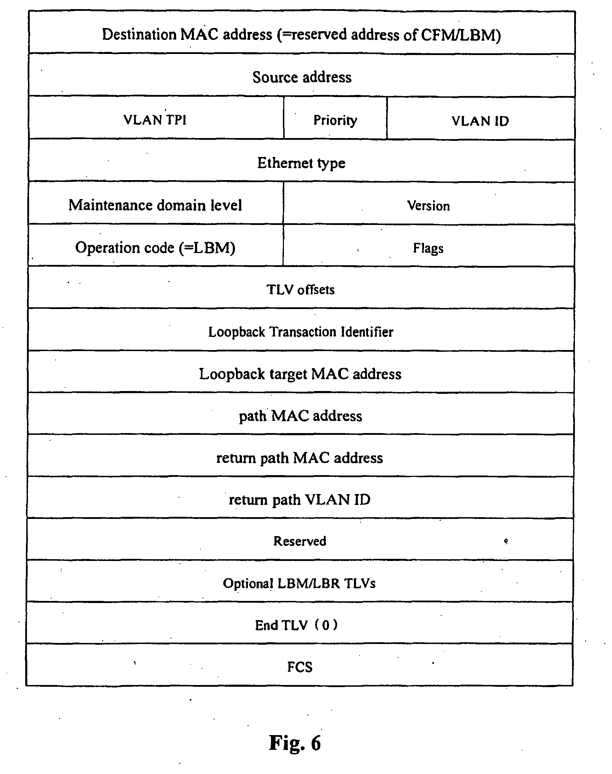

s401, the source node A initiates an LB, and generates and transmits an LBM to the destination node D. The LBM is composed of an LBM Ethernet header and a LBM PDU as described by Figure 6. The LBM Ethernet header includes:

a destination MAC address, i.e. a MAC address dedicated for a CFM/LBM function. All the nodes shall support processing of the MAC address;

a VLAN ID, i.e. a virtual local area network identifier of path identifier of a path including a monitored connection. There is no dedicated path identifier for path A-to-D, but the path A-to-D is a part of path A-to-H. Therefore in the LBM, the VLAN ID is VID (3)of the path A-to-H;

an Ethernet type, indicating an Ethernet type of the LBM, which is a CFM message in this embodiment;

The LBM PDU includes:

a maintenance domain level, indicating a maintenance domain level of maintenance domain of the LBM;

an operation code, indicating an operation type of the LBM;

a path MAC address, which is the MAC address in path identifier. There is no dedicated path identifier for the path A-to-D, but the path A-to-D is a part of the path A-to-H. Therefore in the LBM, the destination MAC address is the MAC address of H, i.e. MAC (H), instead of the MAC address of D;

a loopback target MAC address, indicating a destination address of the loopback;

a return path MAC address, i.e. a MAC address of a return path for LBR. There is no dedicated path identifier for path D-to-A, but the path D-to-A is a part of path H-to-A. Therefore in the LBR, the return path MAC address is the MAC address of A, i.e. MAC (A);

a return path VLAN ID, i.e. a virtual local area network identifier of the return path for LBR. There is no dedicated identifier for the path D-to-A, but the path D-to-A, is a part of the path H-to-A. Therefore in the LBR, the return path VLAN ID is the VLAN ID of the path H-to-A.

Other fields are same as those defined as in the existing standards.

s402, the LBM is transmitted to the CFM processing unit based on the destination MAC address of the LBM.

s403, the CFM processing unit processes the LBM.

If the node receiving the LBM is a non-MP, it is judged whether the received message is a CFM message based on the Ethernet type of the received message. If the received message is not a CFM message, the LBM is discarded. Here because the received message, i.e. the LBM, is a CFM message, it is forwarded by looking up the forwarding table according to the path MAC address in the PDU and the VLAN ID in the header.

If the node receiving the LBM is an MIP or an MEP, the following process is performed.

s4031, it is judged whether the received message is a CFM message based on the Ethernet type of the received message. Here because the received message, i.e. the LBM, is a CFM message, the process proceeds to s4032. If the received message is not a CFM message, the LBM is discarded.

s4032, a maintenance domain level configured at the receiving node is compared with that of the CFM message, i.e. the LBM. If the maintenance domain level configured at the receiving node is higher than that of the LBM, the CFM message is discarded. If the maintenance domain level configured at the receiving node is lower than that of the LBM, the LBM is forwarded according to the path MAC address in the PDU and the VLAN ID in the header. If the maintenance domain level configured at the receiving node equals to that of the LBM, the process proceeds to s4033.

s4033, a message type indicated by the operation code is determined. If the operation code indicating a message type of LBM, the process proceeds to s4034; otherwise, other process corresponding to the operation code is performed.

s4034, it is judged whether the loopback target MAC address is an address of the receiving node. If the loopback target MAC address is an address of the receiving node, the process proceeds to step 404. If the loopback target MAC address is not an address of the receiving node and the receiving node is an MIP, the LBM is forwarded according to the path MAC address in the PDU and the VLAN ID in the header, and if the loopback target MAC address is not an address of the receiving node and the receiving node is an MEP, the LBM is terminated.

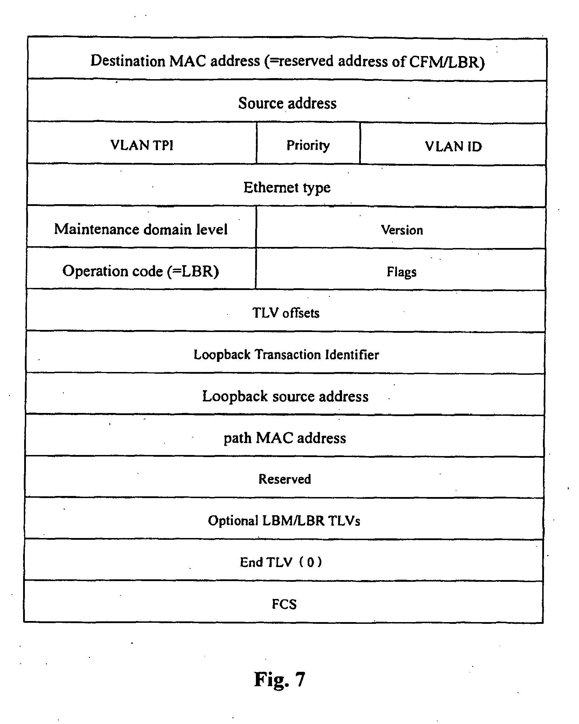

s404, a loopback response (LBR) is transmitted to the source node initiating the loopback. The LBR is composed of an LBR Ethernet header and a LBR PDU as described by Figure 7. The LBR Ethernet header includes:

a destination MAC address, i.e. a MAC address dedicated for a CFM/LBR function;

a VLAN ID, i.e. the return path VLAN ID in the LBM;

an Ethernet type, indicates an Ethernet type of the LBR, which is a CFM message in this embodiment;

The LBR PDU includes:

a maintenance domain level, indicating a maintenance domain level of maintenance domain of the LBR;

an operation code, indicating an operation type of the LBR;

an original MAC address of loopback (LB), indicating an address of the MEP initiating the LB;

a path MAC address, the value of which is the return path MAC address in the LBM.

s405, the node receiving the LBR transmits the LBR to the CFM processing unit of the node based on the destination MAC address of the LBR.

s406, the CFM processing unit processes the received LBR as follows.

If the node receiving the LBR is a non-MP, it is judged whether the received message is a CFM message based on the Ethernet type of the received message. If the received message is not a CFM message, the message is discarded. Here because the received message, i.e. the LBR, is a CFM message, the LBR is forwarded according to the path MAC address in the PDU and the VLAN ID in the header.

If the node receiving the LBR is an MIP or an MEP, the following process is performed.

s4061, it is judged whether the received message is a CFM message based on the Ethernet type of the received message. If the received message is not a CFM message, the received message is discarded. Here because the received message, i.e. the LBR, is a CFM message, the process proceeds to s4062.

s4062, a maintenance domain level configured at the receiving node is compared with that of the CFM message, the LBR. If the maintenance domain level configured at the receiving node is higher than that of the LBR, the LBR is discarded. If the maintenance domain level configured at the receiving node is lower than that of the LBR, the LBR is forwarded based the path MAC address in the PDU and the VLAN ID in the header. If the maintenance domain level configured at the receiving node equals to that of the LBR, the process proceeds to s4063.

s4063, a message type indicated by the operation code is determined. If the operation code indicates a message type of LBR, the process proceeds to s4064; otherwise, other process corresponding to the operation code is performed.

s4064, it is judged whether the original MAC address of loopback is an address of the receiving node. If the original MAC address of loopback is the address of the receiving node, the LBR is terminated, and an LBR PDU is transmitted to an LB processing module. If the original MAC address of loopback is not the address of the receiving node, when the receiving node is an MIP, the LBR is forwarded according to the path MAC address in the PDU and the VLAN ID in the header, and when the receiving node is an MEP, the LBR is terminated.

*Embodiment 5*

Supposing that an LB from the node A to node D of MD Level 4 is required, and that a destination MAC address in a CFM message transmitted from a source node is a MAC address dedicated for a CFM function, when the maintenance points of the PBB-TE network are configured as illustrated in Figure 3, a method for transmitting and processing a connectivity fault management message according to this embodiment of the invention is as follows.

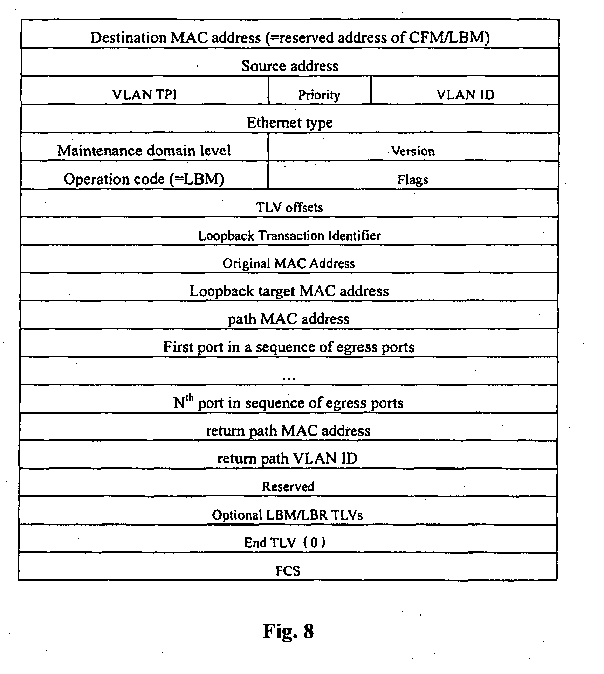

s501, the source node A initiates an LB, and generates and transmits an LBM to the destination node D. The LBM is composed of an LBM Ethernet header and a LBM PDU as described by Figure 8. The LBM Ethernet header includes:

a destination MAC address, i.e. a MAC address dedicated for a CFM/LBM function. All the nodes shall support processing of the MAC address;

a VLAN ID, i.e. a virtual local area network identifier of path identifier of a path including a monitored connection. There is no identifier for path A-to-D, but the path A-to-D is a part of path A-to-H. Therefore in the LBM, the VLAN ID is VID (3) of the path A-to-H;

an Ethernet type, indicating an Ethernet type of the LBM which is a CFM message in this embodiment;

The LBM PDU includes:

a maintenance domain level, indicating a maintenance domain level of maintenance domain of the LBM;

an operation code, indicating an operation type of the LBM;

a path MAC address: i.e. a MAC address in path identifier of the path including the monitored connection. There is no dedicated path identifier for the path A-to-D, but the path A-to-D is a part of the path A-to-H. Therefore in the LBM, the destination MAC address is the MAC address of H, i.e. MAC (H), instead of the MAC address of D;

a loopback target MAC address, indicating a destination address of the loopback;

an explicit route, which is, in this embodiment, a sequence of egress ports of respective networks bridges that are specified to pass through;

a return path MAC address, i.e. a MAC address of return path for an LBR. There is no identifier for path D-to-A, but the path D-to-A is a part of path H-to-A. Therefore in the LBR, the return path MAC address is the MAC address of A, i.e. MAC (A);

a return path VLAN ID, i.e. a virtual local area network identifier of return path for the LBR. There is no identifier for the path D-to-A, but the path D-to-A is a part of the path H-to-A. Therefore in the LBR, the return path VLAN ID is the VLAN ID of the path H-to-A.

s502, the LBM is transmitted to the CFM processing unit based on the destination MAC address of the LBM.

s503, the CFM processing unit processes the LBM.

If the node receiving the LBM is a non-MP, the following process is performed.

s5031A, it is judged whether the received message is a CFM message based on the Ethernet type of the message. If the received message is not a CFM message, the received message is discarded. Here because the received message, i.e. the LBM, is a CFM message, the process proceeds to s5032A.

s5032A, a set of egress ports in a forwarding table is looked up according to the path MAC address in the PDU and the VLAN ID in the header. If a first port in the sequence of egress ports of the LBM is one in the set of egress ports in the forwarding table, the LBM is forwarded according to the first port, and the first port is removed from the sequence of egress ports of the LBM before the LBM is forwarded. If the first port in the sequence of egress ports of the message is not in the set of egress ports in the forwarding table, the LBM is discarded.

If the node receiving the LBM is an MIP, the following process is performed.

s5031B, it is judged whether the received message is a CFM message based on the Ethernet type of the received message. If the received message is not a CFM message, the received message is discarded. Here because the received message, i.e. the LBM, is a CFM message, the process proceeds to s5032B.

s5032B, a maintenance domain level configured at the receiving node is compared with that of the CFM message, i.e. the LBM. If the maintenance domain level configured at the receiving node is higher than that of the LBM, the LBM is discarded. If the maintenance domain level configured at the receiving node is lower than that of the LBM, the LBM is forwarded according to the path MAC address in the PDU and the VLAN ID in the header. If the maintenance domain level configured at the receiving node equals to that of the LBM, the process proceeds to s5033B.

s5033B, a message type indicated by the operation code is determined. If the operation code indicates a message type of LBM, the process proceeds to s5034B; otherwise other process corresponding to the operation code is performed.

s5034B, it is judged whether the loopback target MAC address is an address of the receiving node. If the loopback target MAC address is an address of the receiving node, the process proceeds to s504; otherwise, the process proceeds to step 5035B.

Step 5035B, the set of egress ports in the forwarding table is looked up upon based on the MAC address and the VLAN ID of the path. If the first port in the sequence of egress ports of the message is one in the set of egress ports in the forwarding table, the LBM is forwarded from the first port, and the first port is removed from the sequence of egress ports of the message prior to forwarding. If the first port in the sequence of egress ports of the message is not in the set of egress ports in the forwarding table, the LBM is discarded.

If the node receiving the LBM is an MEP, the following process is performed.

s5031C, it is judged whether the received message is a CFM message based on the Ethernet type of the received message. If the received message is not a CFM message, the received message is discarded. Here because the received message, i.e. the LBM, is a CFM message, the process proceeds to s5032C.

s5032C, the maintenance domain level configured at the receiving node is compared with that of the CFM message, i.e. the LBM. If the maintenance domain level configured at the receiving node is higher than that of the LBM, the LBM is discarded. If the maintenance domain level configured at the receiving node is lower than that of the LBM, the LBM is forwarded according to the path MAC address in the PDU and the VLAN ID in the header. If the maintenance domain level configured at the receiving node equals to that of the LBM, the process proceeds to s5033C.

s5033C, a message type indicated by the operation code is determined. If the operation code indicates a message type of LBM, the process proceeds to s5034C; otherwise other process corresponding to the operation code is performed.

s5034C, it is judged whether the loopback target MAC address carried in the LBM is the address of the receiving node. If the loopback target MAC address carried in the LBM is the address of the receiving node, the process proceeds to s504. If the loopback target MAC address carried in the LBM is not the address of the receiving node, the LBM is terminated.

s504, a loopback response (LBR) is sent to the source node transmitting the LBM.

The LBR is generated and processed as in the method according to the fourth embodiment.

If the explicit route in the LBM as shown in s501 is a sequence of MAC addresses of the respective networks bridges that are specified to be passed through, the processing in the s5032A and the s5035B may be as follows:

It is judged whether the MAC address of the receiving node is identical to the first MAC address in the sequence of MAC addresses. If the MAC address of the receiving node and the first MAC address in the sequence of MAC addresses are identical, the LBM is forwarded according to the first MAC address, and removes the current first MAC address from the sequence of MAC addresses. If the MAC address of the receiving node and the first MAC address in the sequence of MAC addresses are different, the LBM is discarded.

*Embodiment 6*

Supposing that a Linktrace (LT) check from the node A to node D of MD Level 4 is required, and that a destination MAC address in a CFM message transmitted from a source node is a MAC address of a path including a monitored connection, when the maintenance points of the PBB-TE network are configured as illustrated in Figure 3, a method for transmitting and processing a connectivity fault management message according to this embodiment of the invention is as follows.

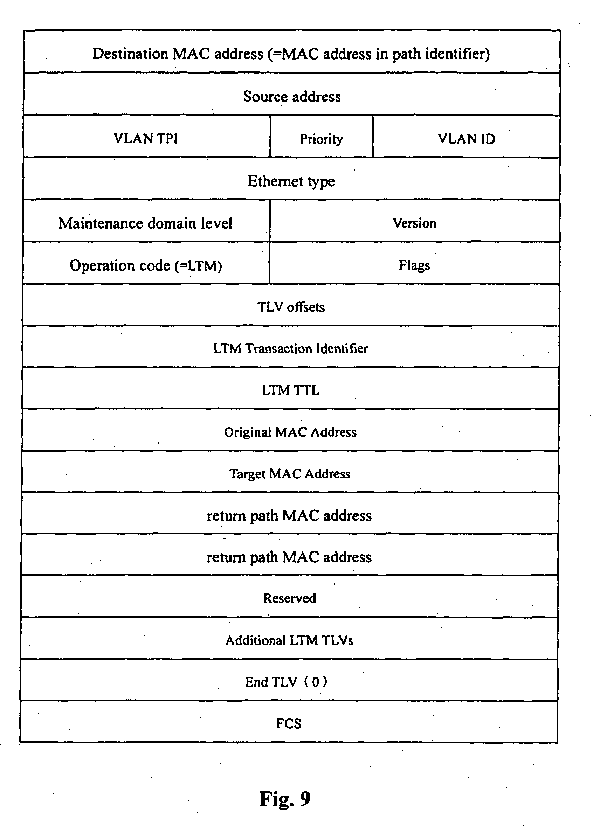

s601, the source node A initiates an LT check, and generates and transmits a Linktrace message (LTM) to the destination node D. The LTM is composed of an LTM Ethernet header and a LTM PDU as described by Figure 9. The LTM Ethernet header includes:

a destination MAC address, i.e. a path MAC address in path identifier of a path including a monitored connection. There is no dedicated path identifier for path A-to-D, but the path A-to-D is a part of path A-to-H. Therefore in the LTM, the destination MAC address is the MAC address of H, i.e. MAC (H), instead of the MAC address of D;

a VLAN ID, i.e. a virtual local area network identifier of path identifier of the path including the monitored connection. There is no dedicated path identifier for the path A-to-D, but the path A-to-D is a part of the path A-to-H. Therefore in the LTM, the VLAN ID is VID (3) of the path A-to-H;

an Ethernet type, indicating Ethernet type of the LTM which is a CFM message in this embodiment;

The LTM PDU includes:

a maintenance domain level, indicating a maintenance domain level of maintenance domain of the LTM;

an operation code, indicating a type of CFM operation;

a return path MAC address, i.e. a MAC address in path identifier of return path, used for returning a Linktrace check Response (LTR) along the return path by subsequent node(s). There is no dedicated path identifier for path D-to-A, but the path D-to-A is a part of path H-to-A. Therefore in the LTR, the return path MAC address is the MAC address of A, i.e. MAC (A);

a return path VLAN ID, i.e. a virtual local area network identifier in path identifier of the return path, used for returning a Linktrace check Response (LTR) along the return path by subsequent nodes. There is no dedicated path identifier for the path D-to-A, but the path D-to-A is a part of the path H-to-A. Therefore in the LTR, the return path VLAN ID is the VLAN ID of the path H-to-A;

LTM TTL, which is an integer value.

s602, the node receiving the LTM processes the LTM.

If the node receiving the LTM is a non-MP, the LTM is forwarded according to the destination MAC address and the VLAN ID.

If the node receiving the LTM is an MIP or an MEP, the following process is performed.

s6021, it is judged whether the received message is a CFM message based on the Ethernet type of the received message. If the received message is not a CFM message, the received message is forwarded according to the destination MAC address and the VLAN ID. Here because the received message, i.e. the LTM, is a CFM message, the process proceeds to s6022.

s6022, a maintenance domain level configured at the receiving node is compared with that of the CFM message, i.e. the LTM. If the maintenance domain level configured at the receiving node is higher than that of the LTM, the LTM message is discarded. If the maintenance domain level configured at the receiving node is lower than that of the LTM, the LTM is forwarded according to the destination MAC address and the VLAN ID. If the maintenance domain level configured at the receiving node equals to that of the LTM, the process proceeds to s6023.

s6023, a message type indicated by the operation code is determined. If the operation code indicates a message type of LTM, the process proceeds to s6024; otherwise, other operation corresponding to the operation code is performed.

s6024, if the node is an MEP, the LTM is terminated, and the process proceeds to s603. If the node is an MIP, the LTM is forwarded according to the destination MAC address and the VLAN ID, and the LTM TTL is decremented by one upon forwarding. Duo to the change of the LTM, the source address of the LTM is modified into an address of local MIP, and a Frame Check Sequence (FCS) is recalculated. It shall be noted that the LTM will not be forwarded if the LTM TTL becomes zero.

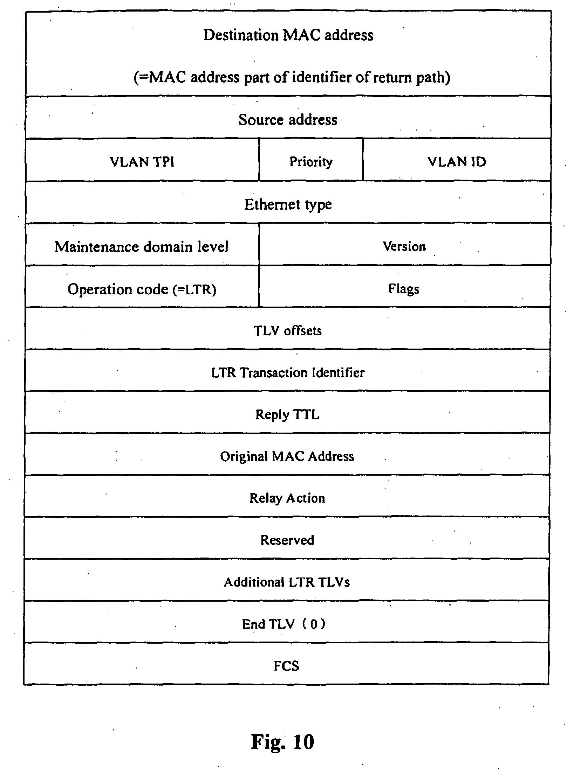

s603, an LTR is transmitted to the source node initiating the LT check. The LTR is composed of an LTR Ethernet header and a LTR PDU as described by Figure 10. The LTR Ethernet header includes:

a destination MAC address, i.e. the return path MAC address in the LTM;

a VLAN ID, i.e. the return path VLAN ID in the LTM;

an Ethernet type, indicating an Ethernet type of the LTR which is a CFM message in this embodiment;

The LTR PDU includes:

a maintenance domain level, indicating a maintenance domain level of maintenance domain of the LTR;

an operation code, indicating an operation type of the LTR;

an original MAC address, i.e. an original MAC address of linktrace check, i.e. an address of source node initiating the LT check;

a Reply TTL, i.e. a value of the received LTM TTL, use for restoring an order in which the nodes receive the LTM.

s604, the node receiving the LTR processes the LTR.

If the node receiving the LTR is a non-MP, the LTR is forwarded according to the destination MAC address and the VLAN ID.

If the node receiving the LTR is an MIP or an MEP, then the following process is performed.

s6041, it is checked whether the destination MAC address and the VLAN ID of the LTR correspond to an entry in the forwarding table. If the destination MAC address and the VLAN ID of the LTR do not correspond to an entry in the forwarding table, the LTR is discarded. If the destination MAC address and the VLAN ID of the LTR correspond to an entry in the forwarding table, the process proceeds to step s6042.

s6042, it is judged whether the received message is a CFM message based on the Ethernet type of the received message. If the received message is not a CFM message, the received message is forwarded according to the destination MAC address and the VLAN ID in the header. Here because the received message, i.e. the LTR, is a CFM message, the process proceeds to s6043.

s6043, a maintenance domain level configured at the receiving node is compared with that of the CFM message, i.e. the LTR. If the maintenance domain level configured at the receiving node is higher than that of the LTR, the LTR is discarded. If the maintenance domain level configured at the receiving node is lower than that of the LTR, the LTR is forwarded according to the destination MAC address and the VLAN ID. If the maintenance domain level configured at the receiving node equals to that of the LTR, the process proceeds to s6044.

s6044, a message type indicated by the operation code is determined. If the operation code indicates a message type of LTR, the process proceeds to s6045; otherwise, other check corresponding to the operation code is performed.

s6045, it is judged whether the original MAC address of linktrace check is an address of the receiving node. If the original MAC address of linktrace check is the address of the receiving node, the LTR is terminated, and it is judged whether there is no link fault between the source node and the destination node. If the original MAC address of linktrace check is not the address of the receiving node, if the receiving node is an MIP, the LTR is forwarded according to the destination MAC address and the VLAN ID in the header, and if the receiving node is an MEP, the LTR is terminated.

*Embodiment 7*

Supposing that an LT check from the node A to node D of MD Level 4 is required, and that a destination MAC address in a CFM message transmitted from a source node is a MAC address dedicated for a CFM function, when the maintenance points of the PBB-TE network are configured as illustrated in Figure 3, a method for transmitting and processing a connectivity fault management message according to the embodiment of the invention is as follows.

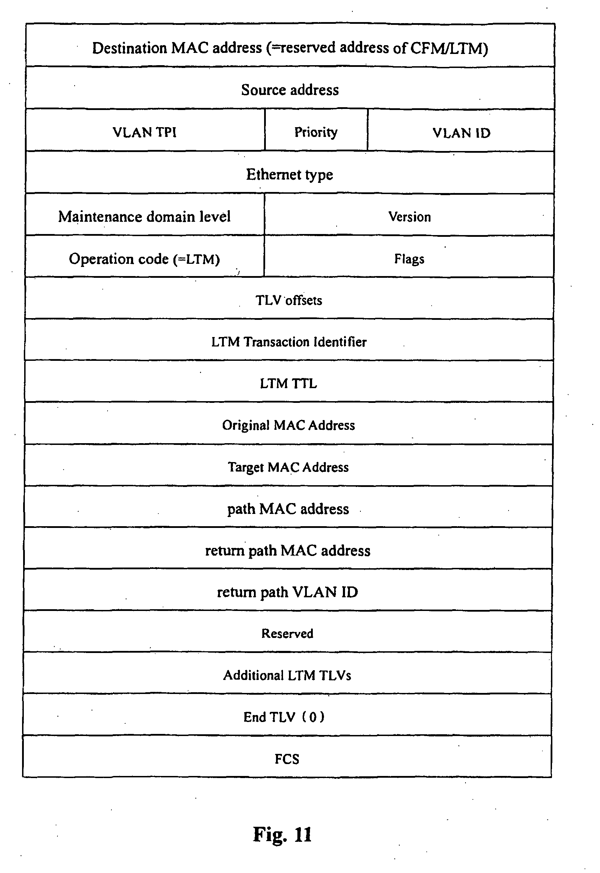

s701, the source node A initiates an LT check, and generates and transmits an LTM to the destination node D. The LTM is composed of an LTM Ethernet header and a LTM PDU as described by Figure 11. The LTM Ethernet header includes:

a destination MAC address, i.e. a MAC address dedicated for a CFM/LTM function. All the nodes shall support an operation on this specific address;

a VLAN ID, i.e. a virtual local area network identifier of path identifier of a path including a monitored connection. There is no dedicated path identifier for path A-to-D, but the path A-to-D is a part of an A-to-H path. Therefore in the LTM, the VLAN ID is VID (3) of the path A-to-H;

an Ethernet type, indicating an Ethernet type of the LTM which is a CFM message in this embodiment;

LTM PDU includes:

a maintenance domain level, indicating a maintenance domain level of maintenance domain of the LTM;

an operation code, indicating a type of CFM operation;

a path MAC address, i.e. a path MAC address in path identifier of the path including the monitored connection. There is no dedicated path identifier for the path A-to-D, but the path A-to-D is a part of the path A-to-H. Therefore in the LTM, the destination MAC address is the MAC address of H, i.e. MAC (H), instead of the MAC address of D;

a return path MAC address, i.e. a MAC address of a return path for LTR. There is no dedicated path identifier for path D-to-A, but the path D-to-A is a part of path H-to-A. Therefore in the LTR, the return path MAC address is the MAC address of A, i.e. MAC (A);

a return path VLAN ID, i.e. a virtual local area network identifier of the return path for LTR. There is no dedicated path identifier for path D-to-A, but the path D-to-A is a part of path H-to-A. Therefore in the LTR, the return path VLAN ID is the VLAN ID of the path H-to-A;

LTM TTL, which an integer value.

s702, after a node receives the LTM, the node receiving the LTM transmits the LTM to a CFM processing unit based on the destination MAC address of the LTM.

s703, the CFM processing unit of the node receiving the LTM processes the LTM.

If the node receiving the LTM is a non-MP, it is judged whether the received message is a CFM message based on the Ethernet type of the message. If the received message is not a CFM message, the received message is discarded. Here, because the received message, i.e. the LTM, is a CFM message, the LTM is forwarded according to the path MAC address in the PDU and the VLAN ID in the header.

If the node receiving the LTM is an MIP or an MEP, then the following process is performed.

s7031, it is judged whether the received message is a CFM message based on the Ethernet type of the message If the received message is not a CFM message, the received message is discarded. Here because the received message, i.e. the LTM, is a CFM message, the process proceeds to s7032.

s7032, a maintenance domain level configured at the receiving node is compared with that of the CFM message, i.e. the LTM. If the maintenance domain level configured at the receiving node is higher than that of the LTM, the LTM is discarded. If the maintenance domain level configured at the receiving node is lower than that of the LTM, the LTM is forwarded according to the path MAC address in the PDU and the VLAN ID in the header. If the maintenance domain level configured at the receiving node equals to that of the LTM, the process proceeds to s7033.

s7033, a message type indicated by the operation code is determined. If the operation code indicates a message type of LTM, the process proceeds to s7034; otherwise, other check corresponding to the operation code is performed.

s7034, if the node receiving the LTM is an MEP, the LTM is terminated, and the process proceeds to s704; and if the node receiving the LTM is an MIP, the LTM, i.e. the CFM message, is forwarded according to the path MAC address in the PDU and the VLAN ID in the header, and the LTM TTL is decremented by one upon the forwarding. Duo to the change of the LTM, the source address of the LTM is modified into an address of the local MIP, and a Frame Check Sequence (FCS) is recalculated. It shall be noted that the LTM will not be forwarded if the LTM TTL becomes zero.

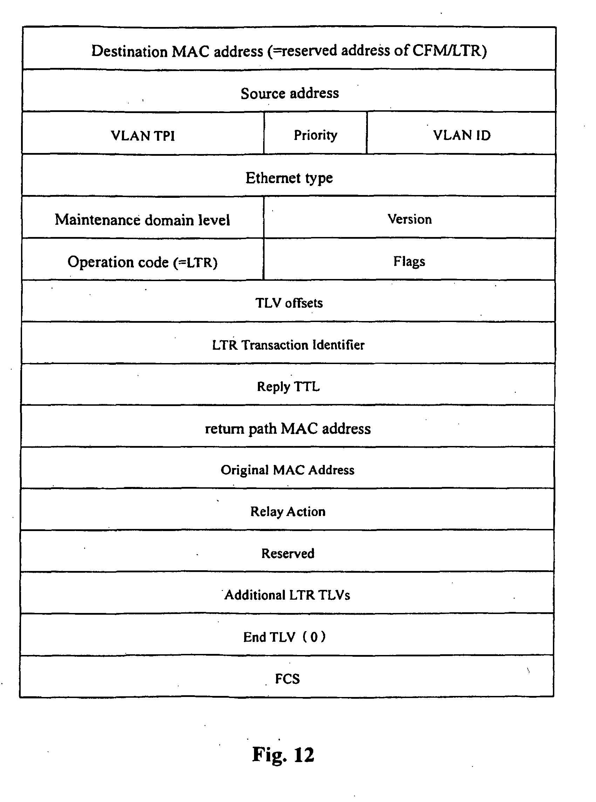

s704, an LTR is transmitted to the source node. The LTR is composed of an LTR Ethernet header and a LTR PDU as described by Figure 12. The LTR Ethernet header includes:

a destination MAC address, i.e. a MAC address dedicated for a CFM/LTR function. All the nodes shall be capable of processing the MAC address;

a VLAN ID, i.e. the return path VLAN ID in the LTM;

an Ethernet type, indicating an Ethernet type of the LTR which is a CFM message in this embodiment;

The LTR PDU includes:

a maintenance domain level, indicating a maintenance domain level of maintenance domain of the LTR;

an operation code, indicating a type of CFM operation;

an original MAC address of linktrace (LT) check, i.e. an address of the MEP initiating the LT check;

a path MAC address, the value of which is the return path MAC address in the LTM;

a Reply TTL, the value of which is the value of the LTM TTL, used for a unicast linktrace check;

a MAC address of a previous hop MIP, i.e. a source address receiving the LTM, used for a multicast linktrace check.

s705, after a node receives the LTR, the node receiving the LTR transmits the LTR to a CFM processing unit based on the destination MAC address of the LTR.

s706, the CFM processing unit processes the LTR.

If the node receiving the LTR is a non-MP, it is judged whether the received message is a CFM message based on the Ethernet type of the received message. If the received message is not a CFM message, the received message is discarded. Here because the received message, i.e. the LTR, is a CFM message, the LTR is forwarded according to the path MAC address in the PDU and the VLAN ID in the header.

If the node receiving the LTR is an MIP or an MEP, the following process is performed.

s7061, it is judged whether the received message is a CFM message based on the Ethernet type of the message, If the received message is not a CFM message, the received message is discarded. Here because the received message, i.e: the LTR, is a CFM message, the process proceeds to s7062.

s7062, a maintenance domain level configured at the receiving node is compared with that of the CFM message, i.e. the LTR. If the maintenance domain level configured at the receiving node is higher than that of the LTR, the LTR is discarded. If the maintenance domain level configured at the receiving node is lower than that of the LTR, the LTR is forwarded according to the path MAC address in the PDU and the VLAN ID in the header. If the maintenance domain level configured at the receiving node equals to that of the LTR, the process proceeds to s7063.

s7063 a message type indicated by the operation code is determined. If the operation code indicates a message type of LTR, the process proceeds to s7064; otherwise, other check corresponding to the operation code is performed.

s7064, it is judged whether the original MAC address of linktrace check is an address of the receiving node. If the original MAC address of linktrace check is the address of the receiving node, the LTR is terminated, and an LTR PDU is transmitted to an LT processing module. If the original MAC address of linktrace check is not the address of the receiving node, when the receiving node is an MIP, the CFM message, i.e. the LTR, is forwarded according to the path MAC address in the PDU and the VLAN ID in the header, and when the receiving node is an MEP, the LTR is terminated.

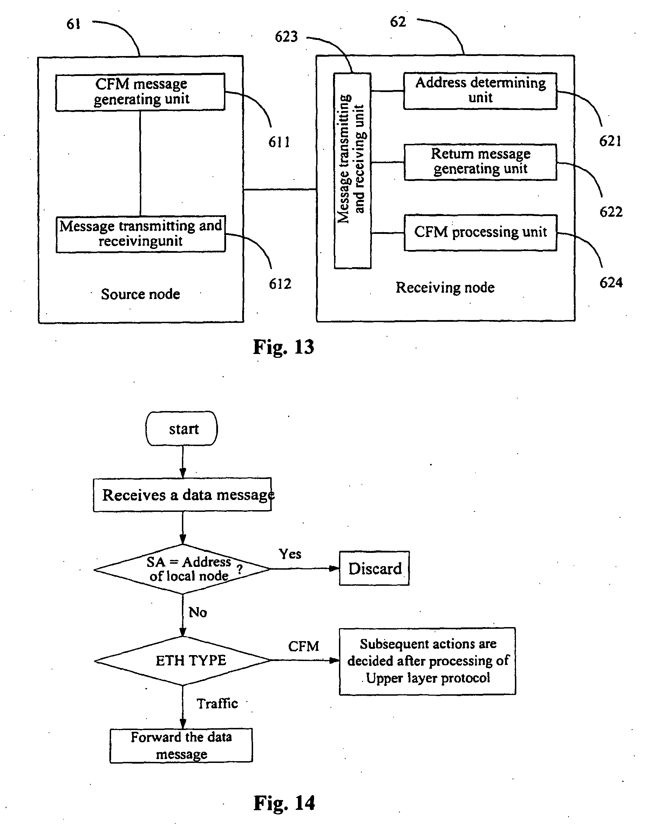

Figure 13 shows a system for transmitting and processing a connectivity fault management message of an Ethernet according to an embodiment of the invention. The system includes a source node 61 and a receiving node 62. The source node 61 includes a CFM message generating unit 611 adapted to generate a CFM message containing a connection maintenance target address; and a message transmitting and receiving unit 612 connected with the CFM message generating unit, adapted to transmit the CFM message and to receive a CFM reply message transmitted from the receiving node 62.

The receiving node 62 includes an address determining unit 621 adapted to determine whether the connection maintenance target address of the CFM message matches an address of the receiving node; a reply message generating unit 622 adapted to generate a CFM reply message containing information of a return path; a message transmitting and receiving unit adapted to receive the CFM message transmitted from the source node and to transmit a CFM reply message; and a CFM processing unit 624 adapted to terminate the CFM message transmitted from the source node 61 or to forward the CFM message to a next hop.

A technical solution according to another embodiment of the invention is as follows.

By changing the existing processing method for a data plane, in a Provider Backbone Bridge Traffic Engineering (PBB-TE) enabling control of a data channel in a large operator network, the presence of a source address in a header of an Ethernet message is rendered meaningless due to prohibition of learning, thus the source address may be replaced by a target address. This will be as described below.

Figure 14 illustrates a flow chart showing the process of processing the structure of a PBB-TE data frame by a node in the previous embodiments. After receiving a message, the node receiving the message checks information of a source address SA in the message, to determine whether the message is a message transmitted from receiving node. If the message is a message transmitted from receiving node, it means that a message loopback occurs, and the message is discarded (which is optional). If the message is not a message transmitted from receiving node, the node receiving the message checks an Ethernet type of the message to determine a subsequent action. If the Ethernet type indicates that the message is a CFM message, the message is transmitted to a CFM processing unit. If the Ethernet type indicates that the message is a client traffic message, an outport is determined by looking up forwarding table according to a destination address (DA) and a VLAN ID, and the message is forwarded, the actions corresponding to the types other than the CFM type will not be described here.

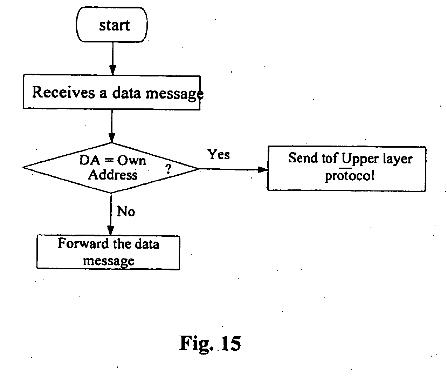

Figure 15 depicts a flow chart showing the process of processing a modified PBB-TE data frame by a node according to an embodiment of the invention. As compared with Figure 7, the field of source address SA in the existing framework of a PBB-TE data frame is replaced by a field of a target MAC address.
The structure of an existing PBB-TE data frame

| | | | | | | |
|---|---|---|---|---|---|---|
| DA_MAC | SA MAC | VLAN TAG | ... | ETH TYPE | Payload | FCS |

The structure of a modified PBB-TE data frame

| | | | | | | |
|---|---|---|---|---|---|---|
| DA_MAC | Target MAC | VLAN TAG | ... | ETH TYPE | Payload | FCS |

The Target MAC has the same semantic as that of destination address (DA) in a connectionless Ethernet. In this embodiment, the process of processing by the node is as follows.

After receiving a message, a node checks a target address of the message, to determine whether the target address is an address of receiving node or a registered multicast address of the receiving node or not. If the target address is an address of receiving node or a registered multicast address of the receiving node, the node receives the message, and transmits the message to an upper-layer protocol for processing based on the field of Ethernet type, i.e. ETH TYPE. If the target address is not an address of receiving node or a registered multicast address of the receiving node, an outport is determined by looking up the forwarding table according to the DA MAC and VLAN ID, and the message is forwarded from the outport: For a CFM message, such as CCM, based upon a special CFM address, the target MAC is set the value of the special CFM address. The maintenance point checks the target MAC address of a received message, and determines whether to transmit the CFM message to a CFM processing unit based on the target MAC address.

With such a method, the existing Ethernet CFM mechanism can be used.

(1) For the Continuity check (CC) mechanism, in a multicast CC, the field of the Target MAC is required to be filled with a CC multicast address as defined in the existing Ethernet CFM standards. In a unicast CC, the field of the Target MAC is required to be filled with a CC unicast destination address The DA MAC and the VLAN ID of the message identify a PBB-TE connection where the message is located, as in the existing PBB-TE mechanism. Other information, such as the Ethernet type and the CCM PDU, may be in compliance with the existing Ethernet CFM standards.

After receiving the message, a node terminates the message based on the CC multicast address or the CC unicast address in the field of target address of the message by using a method as defined in the existing standards, and transmits the message to a CFM processing unit.

(2) For the loopback mechanism, the Target MAC field of an LBM is filled with a MAC address of an MIP to be checked or a special multicast address pointing to all MEPs as defined in present standards. The DA MAC and the VLAN ID of the message identify a PBB-TE connection which is tested, as in the existing PBB-TE mechanism. Other information, such as the Ethernet type, may be in compliance with the existing Ethernet CFM standards. Further, similarly to the above embodiments, address information of source node transmitting the LBM, as well as a DA MAC and a VLAN ID identifying a reverse path, shall be added in LBM PDU.

After receiving the message, a node terminates the message based on the target unicast address or the multicast address filled in the field of target address in the message, and transmits the message to a CFM processing unit based on the Ethernet type or the special multicast address. After processing, an LBR is returned. A DA MAC and a VLAN ID encapsulated in the LBR is the DA MAC and the VLAN ID identifying a reverse path carried in the LBM PDU. A Target MAC address encapsulated in the LBR is the address information of the source node transmitting the LBM.

A node processes the LBR in a similar way. The node terminates the LBR based on the target address of the LBR, and transmits the LBR to a CFM processing unit based on the Ethernet type. The processing of the LBR PDU is in compliance with the existing standards.

(3) The processing method for linktrace is similar to those for CC and LB. A node initiating a linktrace check fills a special multicast address of an LTM into the Target MAC field in the LTM, and carries path identifier of a return path and a MAC address of the node initiating the linktrace check in the LTM PDU. After receiving the LTM, a node determines that it is the LTM based on the LTM multicast address of Target MAC field in the LTM, and transmits the LTM to a linktrace processing unit of the node. When returning an LTR, the MAC address of the node initiating the linktrace check is filled into the Target MAC field in the LTR, and the MAC address and the VLAN ID carrying path identifier of the return path, contained in the LTM, are respectively filled into the field of DA MAC and VLAN ID. The node initiating the linktrace check terminates the LTR based on the Target MAC field in the LTR, and transmits the LTR to a CFM processing unit based on the Ethernet type. The processing of LTR PDU is in compliance with the existing standards.

Those skilled in the art shall appreciate that all or some of the units or steps in the embodiments described above may be realized by instructing relevant hardware by programs stored in computer readable storage medium, such as ROM/RAM, magnetic disk, and optical disk, or may be realized as integrated circuit modules. Or, multiple units or steps may be integrated in a single integrated circuit module. As such, the invention shall not be limited to any specific combination of hardware and software.

## Claims

1. A method for processing a connectivity fault management message, comprising:
receiving, by a receiving node, a loopback message transmitted from a source node, wherein the loopback message carrying a path identifier and a loopback target MAC address, and wherein the loopback target MAC address is contained in a protocol data unit of the loopback message, and wherein the loopback message is composed of an Ethernet header and a protocol data unit, the Ethernet header comprises a destination MAC address being part of a first path identifier identifying a path, a virtual local area network identifier being part of the first path identifier and an Ethernet type indicating that the loopback message is a connectivity fault management message; the protocol data unit comprises a maintenance domain level, an operation code indicating an operation type of the loopback message and the loopback target MAC address indicating a destination address of the loopback, a first return path MAC address which is a MAC address part of a second path identifier identifying a return path for a loopback response message and a first return path virtual local area network identifier which is a virtual local area network identifier part of the second path identifier; and
determining, by the receiving node, whether the loopback target MAC address matches an address of the receiving node;
upon determining that the loopback target MAC address matches the address of the receiving node, transmitting a loopback response message, wherein the loopback response message is composed of a second Ethernet header and a second protocol data unit, the second Ethernet header comprises a destination MAC address equal to the first return path MAC address and a virtual local area network identifier equal to the first return path virtual local area network identifier; the second protocol data unit comprises a second maintenance domain level, an operation code, indicating an operation type of the loopback response message and an original MAC address indicating an address of a device indicated the loopback message; and upon determining that the loopback target MAC address does not match the address of the receiving node, forwarding the loopback message to a next hop based on the path identifier.

2. A receiving node device, comprising:
a message transmitting and receiving unit, adapted to receive a loopback message transmitted from a source node, wherein the loopback message is composed of an Ethernet header and a protocol data unit, the Ethernet header comprises a destination MAC address being part of a first path identifier identifying a path, a virtual local area network identifier being part of the first path identifier and an Ethernet type indicating that the loopback message is a connectivity fault management message; the protocol data unit comprises a maintenance domain level, an operation code indicating an operation type of the loopback message and the loopback target MAC address indicating a destination address of the loopback, a first return path MAC address which is a MAC address part of a second path identifier identifying a return path for a loopback response message and a first return path virtual local area network identifier which is a virtual local area network identifier part of the second path identifier;
an address determining unit, adapted to determine whether a loopback target MAC address in the loopback message matches an address of the receiving node device; and
a connectivity fault management processing unit, adapted to transmit a loopback response message upon determining that the loopback target MAC address in the loopback message matches an address of the receiving node device, and to forward the loopback message transmitted by the message transmitting and receiving unit to a next hop upon determining that the loopback target MAC address in the loopback message does not match an address of the receiving node device, wherein the loopback response message is composed of a second Ethernet header and a second protocol data unit, the second Ethernet header comprises a destination MAC address equal to the first return path MAC address and a virtual local area network identifier equal to the first return path virtual local area network identifier.

3. A source node device, comprising:
a loopback message generating unit, adapted to generate a loopback message comprising a loopback target MAC address, wherein the loopback target MAC address is contained in a protocol data unit of the loopback message, and wherein the loopback message is composed of an Ethernet header and a protocol data unit, the Ethernet header comprises a destination MAC address being part of a first path identifier identifying a path, a virtual local area network identifier being part of the first path identifier and an Ethernet type indicating that the loopback message is a connectivity fault management message; the protocol data unit comprises a maintenance domain level, an operation code indicating an operation type of the loopback message and the loopback target MAC address indicating a destination address of the loopback, a first return path MAC address which is a MAC address part of a second path identifier identifying a return path for a loopback response message and a first return path virtual local area network identifier which is a virtual local area network identifier part of the second path identifier; and
a message transmitting and receiving unit, adapted to transmit the loopback message generated by the loopback message generating unit and to receive a loopback response message, wherein the loopback response message is composed of a second Ethernet header and a second protocol data unit, the second Ethernet header comprises a destination MAC address equal to the first return path MAC address and a virtual local area network identifier equal to the first return path virtual local area network identifier; the second protocol data unit comprises a second maintenance domain level, an operation code, indicating an operation type of the loopback response message and an original MAC address indicating an address of a device indicated the loopback message.

4. A system for implementing connectivity fault management, comprising the receiving node device of claim 2 and the source node device of claim 3.

## Patentansprüche

1. Verfahren zum Verarbeiten einer Konnektivitätsfehler-Verwaltungsnachricht, umfassend:
Empfangen einer von einem Quellenknoten gesendeten Prüfschleifennachricht durch einen empfangenden Knoten, wobei die Prüfschleifennachricht eine Pfadkennung und eine Prüfschleifen-Ziel-MAC-Adresse führt und wobei die Prüfschleifen-Ziel-MAC-Adresse in einer Protokolldateneinheit der Prüfschleifennachricht enthalten ist und wobei die Prüfschleifennachricht aus einem Ethernet-Header und einer Protokolldateneinheit besteht und der Ethernet-Header Folgendes umfasst: eine Ziel-MAC-Adresse, die Teil einer ersten Pfadkennung ist, die einen Pfad identifiziert,
eine Kennung des virtuellen lokalen Netzwerks, die Teil der ersten Pfadkennung ist, und einen Ethernet-Typ, der angibt, dass die Prüfschleifennachricht eine Konnektivitätsfehler-Verwaltungsnachricht ist; und die Protokolldateneinheit Folgendes umfasst: eine Wartungsdomänenebene, einen Operationscode, der einen Operationstyp der Prüfschleifennachricht angibt, und die Prüfschleifen-Ziel-MAC-Adresse, die eine Zieladresse der Prüfschleife angibt, eine erste Rückpfad-MAC-Adresse, die ein MAC-Adressenteil einer zweiten Pfadkennung ist, die einen Rückpfad für eine Prüfschleifenantwortnachricht identifiziert, und eine erste Rückpfad-Kennung des virtuellen lokalen Netzwerks, die ein Kennungsteil des virtuellen lokalen Netzwerks der zweiten Pfadkennung ist; und
Bestimmen durch den empfangenden Knoten, ob die Prüfschleifen-Ziel-MAC-Adresse mit einer Adresse des empfangenden Knotens übereinstimmt;
wenn bestimmt wird, dass die Prüfschleifen-Ziel-MAC-Adresse mit der Adresse des empfangenden Knotens übereinstimmt, Senden einer Prüfschleifen-Antwortnachricht, wobei die Prüfschleifen-Antwortnachricht aus einem zweiten Ethernet-Header und einer zweiten Protokolldateneinheit besteht, der zweite Ethernet-Header eine Ziel-MAC-Adresse gleich der ersten Rückpfad-MAC-Adresse und eine Kennung des virtuellen lokalen Netzwerks gleich der ersten Rückpfadkennung des virtuellen lokalen Netzwerks umfasst; und die zweite Protokolldateneinheit Folgendes umfasst: eine zweite Wartungsdomänenebene, einen Operationscode, der einen Operationstyp der Prüfschleifen-Antwortnachricht angibt, und eine Original-MAC-Adresse, die eine Adresse einer Einrichtung angibt, die die Prüfschleifennachricht angegeben hat; und wenn bestimmt wird, dass die Prüfschleifen-Ziel-MAC-Adresse nicht mit der Adresse des empfangenden Knotens übereinstimmt, Weiterleiten der Prüfschleifennachricht zu einem Next Hop auf der Basis der Pfadkennung.

2. Empfangende Knoteneinrichtung, umfassend:
eine Nachrichtensende- und -empfangseinheit, die dafür ausgelegt ist, eine von einem Quellenknoten gesendete Prüfschleifennachricht zu empfangen, wobei die Prüfschleifennachricht aus einem Ethernet-Header und einer Protokolldateneinheit besteht und der Ethernet-Header Folgendes umfasst: eine Ziel-MAC-Adresse, die Teil einer ersten Pfadkennung ist, die einen Pfad identifiziert, wobei eine Kennung des virtuellen lokalen Netzwerks Teil der ersten Pfadkennung ist, und einen Ethernet-Typ, der angibt, dass die Prüfschleifennachricht eine Konnektivitätsfehler-Verwaltungsnachricht ist; und die Protokolldateneinheit Folgendes umfasst: eine Wartungsdomänenebene, einen Operationscode, der einen Operationstyp der Prüfschleifennachricht angibt, und die Prüfschleifen-Ziel-MAC-Adresse, die eine Zieladresse der Prüfschleife angibt, eine erste Rückpfad-MAC-Adresse, die ein MAC-Adressenteil einer zweiten Pfadkennung ist, die einen Rückpfad für eine Prüfschleifen-Antwortnachricht identifiziert, und eine erste Rückpfad-Kennung des virtuellen lokalen Netzwerks, die ein Kennungsteil des virtuellen lokalen Netzwerks der zweiten Pfadkennung ist;
eine Adressenbestimmungseinheit, die dafür ausgelegt ist, zu bestimmen, ob eine Prüfschleifen-Ziel-MAC-Adresse in der Prüfschleifennachricht mit einer Adresse der empfangenden Knoteneinrichtung übereinstimmt; und
eine Konnektivitätsfehler-Verwaltungsverarbeitungseinheit, die dafür ausgelegt ist, eine Prüfschleifen-Antwortnachricht zu senden, wenn bestimmt wird, dass die Prüfschleifen-Ziel-MAC-Adresse in der Prüfschleifennachricht mit einer Adresse der empfangenden Knoteneinrichtung übereinstimmt, und die durch die Nachrichtensende- und -empfangseinheit gesendete Prüfschleifennachricht zu einem Next Hop weiterzuleiten, wenn bestimmt wird, dass die Prüfschleifen-Ziel-MAC-Adresse in der Prüfschleifennachricht nicht mit einer Adresse der empfangenden Knoteneinrichtung übereinstimmt, wobei die Prüfschleifen-Antwortnachricht aus einem zweiten Ethernet-Header und einer zweiten Protokolldateneinheit besteht,
wobei der zweite Ethernet-Header eine Ziel-MAC-Adresse gleich der ersten Rückpfad-MAC-Adresse und eine Kennung des virtuellen lokalen Netzwerks gleich der ersten Rückpfadkennung des virtuellen lokalen Netzwerks umfasst.

3. Quellenknoteneinrichtung, umfassend:
eine Prüfschleifennachricht-Erzeugungseinheit, die dafür ausgelegt ist, eine Prüfschleifennachricht zu erzeugen, die eine Prüfschleifen-Ziel-MAC-Adresse umfasst, wobei die Prüfschleifen-Ziel-MAC-Adresse in einer Protokolldateneinheit der Prüfschleifennachricht enthalten ist und wobei die Prüfschleifennachricht aus einem Ethernet-Header und einer Protokolldateneinheit besteht und der Ethernet-Header Folgendes umfasst: eine Ziel-MAC-Adresse, die Teil einer ersten Pfadkennung ist, die einen Pfad identifiziert, eine Kennung des virtuellen lokalen Netzwerks, die Teil der ersten Pfadkennung ist, und einen Ethernet-Typ, der angibt, dass die Prüfschleifennachricht eine Konnektivitätsfehler-Verwaltungsnachricht ist; und die Protokolldateneinheit Folgendes umfasst: eine Wartungsdomänenebene, einen Operationscode, der einen Operationstyp der Prüfschleifennachricht angibt, und die Prüfschleifen-Ziel-MAC-Adresse, die eine Zieladresse der Prüfschleife angibt, eine erste Rückpfad-MAC-Adresse, die ein MAC-Adressenteil einer zweiten Pfadkennung ist, die einen Rückpfad für eine Prüfschleifen-Antwortnachricht identifiziert, und eine erste Rückpfad-Kennung des virtuellen lokalen Netzwerks, die ein Kennungsteil des virtuellen lokalen Netzwerks der zweiten Pfadkennung ist; und
eine Nachrichtensende- und -empfangseinheit, die dafür ausgelegt ist, die durch die Prüfschleifennachricht-Erzeugungseinheit erzeugte Prüfschleifennachricht zu senden und eine Prüfschleifen-Antwortnachricht zu empfangen, wobei die Prüfschleifen-Antwortnachricht aus einem zweiten Ethernet-Header und einer zweiten Protokolldateneinheit besteht, wobei der zweite Ethernet-Header eine Ziel-MAC-Adresse gleich der ersten Rückpfad-MAC-Adresse und eine Kennung des virtuellen lokalen Netzwerks gleich der ersten Rückpfadkennung des virtuellen lokalen Netzwerks umfasst; und die zweite Protokolldateneinheit Folgendes umfasst: eine zweite Wartungsdomänenebene, einen Operationscode, der einen Operationstyp der Prüfschleifenantwortnachricht angibt, und eine Original-MAC-Adresse, die eine Adresse einer Einrichtung angibt, die die Prüfschleifennachricht angegeben hat.

4. System zum Implementieren von Konnektivitätsfehlerverwaltung, das die empfangende Knoteneinrichtung nach Anspruch 2 und die Quellenknoteneinrichtung nach Anspruch 3 umfasst.

## Revendications

1. Procédé de traitement d'un message de gestion de défaillance de connectivité, comprenant :
la réception, par un noeud destinataire, d'un message de bouclage transmis par un noeud source, le message de bouclage comportant un identifiant de chemin et une adresse MAC cible de bouclage, et l'adresse MAC cible de bouclage étant contenue dans une unité de données de protocole du message de bouclage, et dans lequel le message de bouclage est composé d'un en-tête Ethernet et d'une unité de données de protocole, l'en-tête Ethernet comprenant une adresse MAC destinataire faisant partie d'un premier identifiant de chemin qui identifie un chemin, un identifiant de réseau local virtuel faisant partie du premier identifiant de chemin et un type Ethernet indiquant que le message de bouclage est un message de gestion de défaillance de connectivité ; l'unité de données de protocole comprenant un niveau de domaine de maintenance, un code d'opération indiquant un type d'opération du message de bouclage et l'adresse MAC cible de bouclage indiquant une adresse destinataire du bouclage, une première adresse MAC de chemin de retour qui est une partie d'adresse MAC d'un second identifiant de chemin qui identifie un chemin de retour pour un message de réponse de bouclage et un premier identifiant de réseau local virtuel de chemin de retour qui est une partie d'identifiant de réseau local virtuel du second identifiant de chemin ; et
la détermination, par le noeud destinataire, que l'adresse MAC cible de bouclage correspond ou non à une adresse du noeud destinataire ;
suite à la détermination que l'adresse MAC cible de bouclage correspond à l'adresse du noeud destinataire, la transmission d'un message de réponse de bouclage, le message de réponse de bouclage étant composé d'un second en-tête Ethernet et d'une seconde unité de données de protocole, le second en-tête Ethernet comprenant une adresse MAC destinataire égale à la première adresse MAC de chemin de retour et un identifiant de réseau local virtuel égal au premier identifiant de réseau local virtuel de chemin de retour ; la seconde unité de données de protocole comprenant un second niveau de domaine de maintenance, un code d'opération, indiquant un type d'opération du message de réponse de bouclage et une adresse MAC d'origine indiquant une adresse d'un dispositif indiqué dans le message de bouclage ;
et suite à la détermination que l'adresse MAC cible de bouclage ne correspond pas à l'adresse du noeud destinataire, l'acheminement du message de bouclage à un saut suivant en fonction de l'identifiant de chemin.

2. Dispositif nodal destinataire, comprenant :
une unité de transmission et de réception de messages, adaptée pour recevoir un message de bouclage transmis par un noeud source, le message de bouclage étant composé d'un en-tête Ethernet et d'une unité de données de protocole, l'en-tête Ethernet comprenant une adresse MAC destinataire faisant partie d'un premier identifiant de chemin qui identifie un chemin, un identifiant de réseau local virtuel faisant partie du premier identifiant de chemin et un type Ethernet indiquant que le message de bouclage est un message de gestion de défaillance de connectivité; l'unité de données de protocole comprenant un niveau de domaine de maintenance, un code d'opération indiquant un type d'opération du message de bouclage et l'adresse MAC cible de bouclage indiquant une adresse destinataire du bouclage, une première adresse MAC de chemin de retour qui est une partie d'adresse MAC d'un second identifiant de chemin qui identifie un chemin de retour pour un message de réponse de bouclage et un premier identifiant de réseau local virtuel de chemin de retour qui est une partie d'identifiant de réseau local virtuel du second identifiant de chemin ;
une unité de détermination d'adresse, adaptée pour déterminer qu'une adresse MAC cible de bouclage dans le message de bouclage correspond ou non à une adresse du dispositif nodal destinataire ; et
une unité de traitement de gestion de défaillance de connectivité, adaptée pour transmettre un message de réponse de bouclage suite à la détermination que l'adresse MAC cible de bouclage dans le message de bouclage correspond à une adresse du dispositif nodal destinataire, et acheminer le message de bouclage transmis par l'unité de transmission et de réception de messages à un saut suivant suite à la détermination que l'adresse MAC cible de bouclage dans le message de bouclage ne correspond pas à une adresse du dispositif nodal destinataire, le message de réponse de bouclage étant composé d'un second en-tête Ethernet et d'une seconde unité de données de protocole, le second en-tête Ethernet comprenant une adresse MAC destinataire égale à la première adresse MAC de chemin de retour et un identifiant de réseau local virtuel égal au premier identifiant de réseau local virtuel de chemin de retour.

3. Dispositif nodal source, comprenant :
une unité de génération de message de bouclage, adaptée pour générer un message de bouclage comprenant une adresse MAC cible de bouclage, l'adresse MAC cible de bouclage étant contenue dans une unité de données de protocole du message de bouclage, et dans lequel le message de bouclage est composé d'un en-tête Ethernet et d'une unité de données de protocole, l'en-tête Ethernet comprenant une adresse MAC destinataire faisant partie d'un premier identifiant de chemin qui identifie un chemin, un identifiant de réseau local virtuel faisant partie du premier identifiant de chemin et un type Ethernet indiquant que le message de bouclage est un message de gestion de défaillance de connectivité; l'unité de données de protocole comprenant un niveau de domaine de maintenance, un code d'opération indiquant un type d'opération du message de bouclage et l'adresse MAC cible de bouclage indiquant une adresse destinataire du bouclage, une première adresse MAC de chemin de retour qui est une partie d'adresse MAC d'un second identifiant de chemin qui identifie un chemin de retour pour un message de réponse de bouclage et un premier identifiant de réseau local virtuel de chemin de retour qui est une partie d'identifiant de réseau local virtuel du second identifiant de chemin ; et
une unité de transmission et de réception de messages, adaptée pour transmettre le message de bouclage généré par l'unité de génération de message de bouclage et recevoir un message de réponse de bouclage, le message de réponse de bouclage étant composé d'un second en-tête Ethernet et d'une seconde unité de données de protocole, le second en-tête Ethernet comprenant une adresse MAC destinataire égale à la première adresse MAC de chemin de retour et un identifiant de réseau local virtuel égal au premier identifiant de réseau local virtuel de chemin de retour ; la seconde unité de données de protocole comprend un second niveau de domaine de maintenance, un code d'opération, indiquant un type d'opération du message de réponse de bouclage et une adresse MAC d'origine indiquant une adresse d'un dispositif indiqué dans le message de bouclage.

4. Système de mise en oeuvre d'une gestion de défaillance de connectivité, comprenant le dispositif nodal destinataire de la revendication 2 et le dispositif nodal source de la revendication 3.
